# EUROPÄISCHE PATENTANMELDUNG

(11) **EP 1 038 723 A2**
(43) Veröffentlichungstag der Anmeldung: **27.09.2000**
(21) Anmeldenummer: 00100690.7
(22) Anmeldetag: 14.01.2000
(51) Int. Cl.: B60N 2/06, B60N 2/48

(54) **Fahrzeugsitz mit einer Längsverstellvorrichtung und einer Kopfstütze**

(30) Priorität: 19.03.1999 DE 19912399
(71) Anmelder: C.Rob. Hammerstein GmbH & Co.KG, 42699 Solingen (DE)
(72) Erfinder: Becker, Burckhard, 42655 Solingen (DE); Frohnhaus, Ernst-Reiner, 42653 Solingen (DE)
(74) Vertreter: Bauer, Wulf, Dr.

(57) **Zusammenfassung**

Die Erfindung bezieht sich auf einen Fahrzeugsitz mit a) einem Sitzteil (20), mit b) einer Rückenlehne (22), mit c) einer Längsverstellvorrichtung (24), die mindestens ein Schienenpaar bestehend aus einer Bodenschiene (26) und einer gegenüber dieser Bodenschiene (26) in einer Längsverstellrichtung (28) verschiebbaren Sitzschiene (30), die mit dem Sitzteil (20) verbunden ist, und mit d) einer gegenüber der Rückenlehne (22) höhenverstellbaren Kopfstütze (32). Die Kopfstütze (32) steht über einen Bowdenzug (40) mit der Bodenschiene (26) in Verbindung, so dass bei einer Längsverschiebung der Sitzschiene (30) gegenüber der Bodenschiene (26) die Kopfstütze (32) höhenverstellt wird.

## Beschreibung

Die Erfindung bezieht sich auf einen Fahrzeugsitz mit a) einem Sitzteil, mit b) einer Rückenlehne, mit c) einer Längsverstellvorrichtung, die mindestens ein Schienenpaar bestehend aus einer Bodenschiene und einer gegenüber dieser Bodenschiene in einer Längsverstellrichtung verschiebbaren Sitzschiene, die mit dem Sitzteil verbunden ist, und mit d) einer gegenüber der Rückenlehne höhenverstellbaren Kopfstütze.

Fahrer und Beifahrer von Kraftfahrzeugen, insbesondere Pkws stellen zwar normalerweise ihren Fahrzeugsitz jeweils so ein, dass sie bequem und ergonomisch günstig in ihm sitzen, sie unterlassen aber in den allermeisten Fällen die korrekte Einstellung der Kopfstütze. Dies liegt schon daran, dass sie mit der Kopfstütze normalerweise nicht ständig in Kontakt kommen, sondern der Kopf sich oftmals etwas vor der Kopfstütze befindet. Gerade die korrekte Einstellung der Kopfstütze, insbesondere die korrekte Höhe der Kopfstütze, ist aber für die Sicherheit von großer Bedeutung, um bei Unfällen eine übermäßige Belastung der Halswirbelsäule zu vermeiden. Eine korrekte Höhenposition der Kopfstütze ist daher entscheidend, oftmals sogar lebensrettend.

Hier setzt die Erfindung ein. Sie hat es sich zur Aufgabe gemacht, eine Zwangskopplung zwischen Höhenverstellung der Kopfstütze und einer weiteren, praktisch immer benutzten Einstellfunktion des Fahrzeugsitzes so anzugeben, dass mit sehr hoher Wahrscheinlichkeit die richtige Höhe der Kopfstütze in Abhängigkeit von der tatsächlich gewählten Einstellung erreicht wird. Auf diese Weise soll dem Benutzer in Abhängigkeit von seiner jeweiligen Körpergröße die richtige Position der Kopfstütze angeboten werden, wenn er sonstige Einstellungen, insbesondere die Längsverstellung seines Fahrzeugsitzes, vornimmt. Dadurch hat die Kopfstütze im wesentlichen die richtige Höhe. Nach wie vor kann aber die Kopfstütze immer noch individuell verstellt werden.

Ausgehend von dem Fahrzeugsitz der eingangs genannten Art wird diese Aufgabe dadurch gelöst, dass die Kopfstütze über einen Bowdenzug mit der Bodenschiene in Verbindung steht, so dass bei einer Längsverschiebung der Sitzschiene gegenüber der Bodenschiene die Kopfstütze höhenverstellt wird.

Erfindungsgemäß ist also die Längsverstellvorrichtung zwangsgekoppelt über den Bowdenzug mit der Höhenverstelleinrichtung der Kopfstütze. Dabei ist es vorzugsweise so, dass bei einer Verschiebung der Längsverstellvorrichtung nach vorn die Kopfstütze nach unten fährt und umgekehrt. Aufgrund des Bowdenzuges erfolgt die Übertragung der Stellkraft von der Längsverstellvorrichtung zur Kopfstütze hin. Ein Bowdenzug ist besonders deshalb vorteilhaft, weil die durch ihn erfolgte Kraftübertragung unabhängig ist von Relativbewegungen zwischen der Längsverstellvorrichtung und der Kopfstütze, also beispielsweise einer Neigungsverstellung der Rückenlehne.

Der erfindungsgemäße Fahrzeugsitz ermöglicht eine einfache und mechanisch sichere Kopplung der Bewegungen der Längsverstellvorrichtung und der Höheneinstellung der Kopfstütze. Der Aufwand für diese Zwangskopplung ist gering. Der Erfindung eignet sich sowohl für motorisch verstellte Längsverstellvorrichtungen als auch für Längsverstellvorrichtungen ohne Motorantrieb. Es werden relativ wenige, zusätzliche Bauteile benötigt, um die Zwangskopplung zu erreichen. Diese zusätzlichen Teile sind auch relativ leichtgewichtig, sie lassen sich klapperfrei und auch geräuscharm ausbilden.

Ein besonderer Vorzug der Erfindung liegt aber auch darin, dass der Weg der Längsverstellvorrichtung nicht zwangsläufig proportional dem Weg der Höheneinstellung der Kopfstütze folgen muß, vielmehr es sogar möglich ist, nur in einem mittleren Wegbereich der Längsverstellvorrichtung die gesamte Höheneinstellung der Kopfstütze vorzunehmen.

Um trotz der mechanischen Zwangskopplung mit der Längsverstellvorrichtung doch eine individuelle Höheneinstellung der Kopfstütze vornehmen zu können, ist der Bowdenzug vorzugsweise über eine Rutschverbindung mit einer Trageinheit der Kopfstütze innerhalb der Rückenlehne verbunden. Diese Rutschverbindung ist so ausgebildet, dass bei Zug im Bowdenzug stets eine Verstellung der Kopfstütze erfolgt, ebenfalls aber auch eine Verstellung der Kopfstütze erfolgt, wenn diese mechanisch per Hand hoch- und herunterbewegt wird.

Da ein Bowdenzug im wesentlichen nur Zugkräfte übertragen kann, weil seine Seele nicht für Druckkräfte ausgelegt ist und die Hülle, die für Druckkräfte ausgelegt ist, im wesentlichen keine Zugkräfte aufnehmen kann, wird in Weiterbildung der Erfindung vorgeschlagen, dass der Bowdenzug eine O-förmig geschlossene Seele und zwei separate Hüllen hat, dass in der Rückenlehne die Seele entlang eines oberen Freibereichs ohne Hülle ist, in diesem oberen Freibereich im wesentlichen parallel zur Verstellrichtung der Kopfstütze verläuft und mit einer in der Rückenlehne befindlichen Trageinheit der Kopfstütze verbunden ist, vorzugsweise über eine Rutschverbindung verbunden ist, dass die eine Hülle einen oberen Endbereich hat, der oberhalb des oberen Freibereichs an der Rückenlehne befestigt ist und dass die andere Hülle ebenfalls einen oberen Endbereich hat, der unterhalb des oberen Freibereichs an der Rückenlehne befestigt ist. Dadurch erfolgt in beiden Stellrichtungen der Höheneinstellung die Verstellung immer mit Zug im Bowdenzug.

Grundsätzlich ist es aber auch möglich, lediglich eine einfache Verbindung durch einen Bowdenzug zwischen der Längsverstellvorrichtung und der Kopfstütze vorzusehen. Dabei wird über den Bowdenzug nur eine Bewegungsrichtung, beispielsweise das Hochfahren der Kopfstütze, bewirkt. Das Herunterfahren der Kopfstütze wird dann durch eine Zugfeder, die in der Rückenlehne angeordnet ist, bewerkstelligt.

In einer besonders bevorzugten, weiteren Ausbildung der Erfindung ist vorgesehen, dass der Bowdenzug eine O-förmig geschlossen umlaufende Seele und zwei separate Hüllen hat, dass im Bereich der Längsführung die Seele einen unteren Freibereich hat, in der sie ohne Hülle ist und parallel zur Längsverstellrichtung verläuft, dass die beiden Hüllen jeweils einen unteren Endbereich haben, von denen der eine am vorderen Ende des unteren Freibereichs mit der Sitzschiene verbunden ist und der andere am hinteren Ende des unteren Freibereichs mit der Sitzschiene verbunden ist, und dass im unteren Freibereich ein Mitnehmer mit der Seele verbunden ist, der mit einem ihm angepaßten Mitnehmerteil der Bodenschiene zusammenwirkt. Über den Mitnehmer und das ihm angepaßte Mitnehmergegenteil (z.B. Mitnehmerbucht) der Bodenschiene ist es möglich, die Bewegung der Kopfstütze mehr oder weniger proportional zum Weg der Längsverstellvorrichtung auszubilden. Insbesondere ist es möglich, dass nur in einem mittleren Verstellbereich der Längsverstellvorrichtung bereits der komplette Verstellweg der Kopfstütze erfolgt und dass in einem vorderen Teilstück des Gesamtweges der Längsverstellvorrichtung und ebenfalls in einem hinteren Teilstück dieses Gesamtweges gar keine Verstellung der Kopfstütze über die Zwangskopplung nach der Erfindung mehr durchgeführt wird. Um dies zu erreichen, wird vorgeschlagen, gemäß der Lehre von Anspruch 7 zu verfahren.

Auf diese Weise wird erreicht, dass der üblicherweise kürzere Gesamtverstellweg der Kopfstütze dem zumeist deutlich längeren, beispielsweise mindestens doppelt so langen Verstellweg der Längsverstellvorrichtung angepaßt werden kann. Weiterhin wird erreicht, dass die Kopfstütze für die allermeisten der unterschiedlichen großen Passagiere immer die richtige Position hat.

Weitere Vorteile und Merkmale der Erfindung ergeben sich aus den übrigen Ansprüchen sowie der nun folgenden Beschreibung eines nicht einschränkend zu verstehenden Ausführungsbeispiels der Erfindung, das unter Bezugnahme auf die Zeichnung näher erläutert wird. In dieser Zeichnung zeigen:

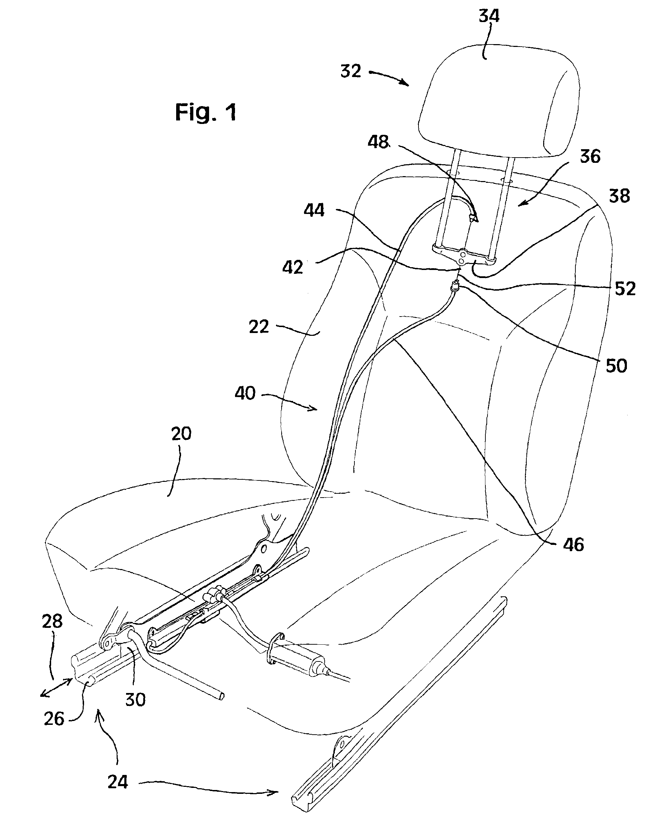

- Fig. 1:: eine perspektivische Gesamtansicht eines Fahrzeugsitzes nach der Erfindung,
- Fig. 2:: ein Schnittbild durch ein Schienenpaar des Fahrzeugsitzes gemäß Figur 1,
- Fig. 3:: einen Längsschnitt durch einen Kanal, wie er aus Figur 2 ersichtlich ist, bei einer Schnittlinie parallel zur Seele des Bowdenzuges im unteren Freibereich gemäß Figur 2 und mit von unten nach oben verlaufender, also vertikaler Schnittebene in einem ersten Relativzustand zwischen Sitzschiene und Bodenschiene,
- Fig. 4:: eine Darstellung entsprechend Figur 3, jedoch in einem anderen Relativzustand,
- Fig. 5:: eine Darstellung wie Figur 2, jedoch in einem wiederum anderen Relativzustand,
- Fig. 6:: eine Ansicht eines Mitnehmers, gesehen in Längsrichtung der Seele im unteren Freibereich,
- Fig. 7:: eine Darstellung entsprechend Figur 6, jedoch für eine andere Ausführung des Mitnehmers,
- Fig. 8:: ein Diagramm über den Zusammenhang zwischen dem Weg der Kopfstütze (Kopfstützenhöhe) zum Längsverstellweg der Längsverstellvorrichtung, eingezeichnet sind einige Bereiche und ein Punkt, der unter Bezugnahme auf die Figuren 3 bis 5 näher erläutert werden, und
- Fig. 9:: eine Darstellung des Verbindungsbereichs von Kopfstütze und Bowdenzug.

Der Fahrzeugsitz hat ein Sitzteil 20, eine am Sitzteil 20 schwenkbar angelenkte Rückenlehne 22, eine Längsverstellvorrichtung 24 mit zwei Schienenpaaren, die jeweils aus einer Bodenschiene 26, die in bekannter Weise für die Befestigung an einer hier nicht dargestellten Bodengruppe eines Kraftfahrzeugs vorgesehen ist und einer gegenüber dieser Bodenschiene 26 in einer Längsverstellrichtung 28 verschiebbaren Sitzschiene 30, die mit dem Sitzteil 20 verbunden ist. Die Verbindung erfolgt im konkret gezeigten Fall über eine hier nicht näher dargestellte Höhenverstellvorrichtung, die Bestandteil des Sitzteils 20 ist. Schließlich hat der Fahrzeugsitz eine Kopfstütze 32. Sie hat ein Kissen 34 und eine Trageinheit 36 mit zwei parallelen Holmen und einem Querteil 38, letzteres befindet sich innerhalb der Rückenlehne 22.

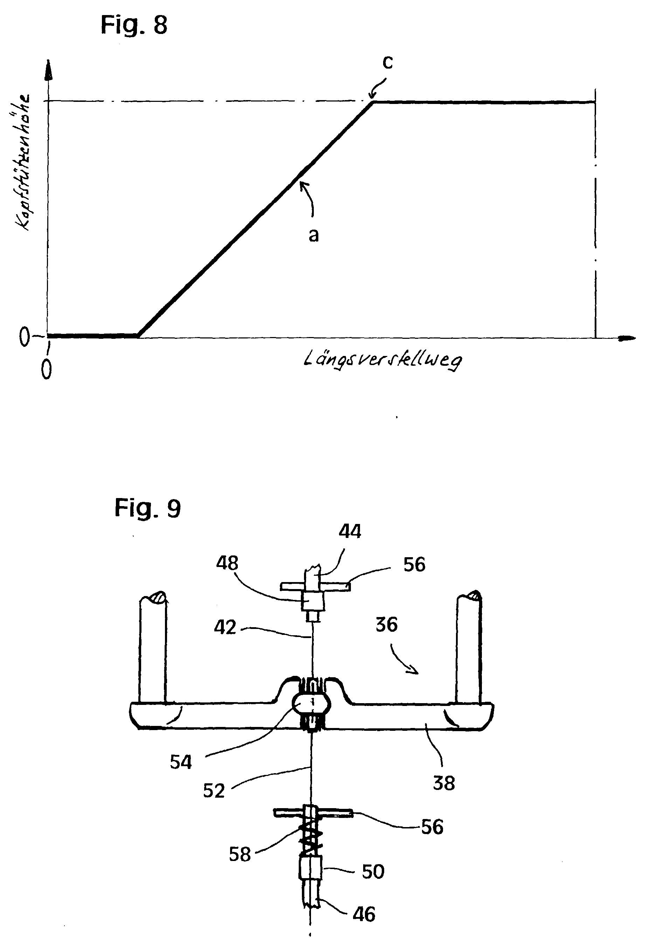

Die Kopfstütze 32 ist höhenverstellbar, durch Eindrücken oder Herausziehen der Holme kann in bekannter Weise die Höhe des Kissens 34 eingestellt werden. Die Holme sind in einer hier nicht näher dargestellten, ansich bekannten Führung geführt. Diese ist an einer Tragstruktur 56 der Rückenlehne, insbesondere einem Rahmen, befestigt. Auch letzteres ist bekannt, so dass zur Vereinfachung der Darstellung die Tragstruktur 56 der Rückenlehne 22 in Figur 9 nur angedeutet ist. Gegenüber der Tragstruktur kann das Querteil 38 bewegt werden.

Es ist ein Bowdenzug 40 vorgesehen, der eine Seele 42 hat, die in einer geschlossenen Schlaufe umläuft. Die Seele wird von zwei Hüllen, nämlich einer oberen Hülle 44 und einer unteren Hülle 46 umgriffen. In bekannter Weise ist die Seele 42 biegsam und zugfest, die beiden Hüllen 44, 46 können Druckkräfte aufnehmen, auch sie sind biegsam.

Die beiden Hüllen 44, 46 enden in Nähe des Querteils 38 in jeweils einem oberen Endbereich 48, 50. Diese oberen Endbereiche 48, 50 sind an der Tragstruktur 56 der Rückenlehne 22 befestigt. Zwischen den beiden oberen Endbereichen 48, 50 hat die Seele 42 einen oberen Freibereich 52, in der sie nicht von einer Hülle umgeben ist. Dieser Freibereich 52 ist so lang gewählt, dass das Querteil 38 den gesamten Weg der Höheneinstellung der Kopfstütze 32 von der untersten Position in die oberste Position ausführen kann. Anders ausgedrückt ist der obere Freibereich 52 länger als der Verstellweg der Kopfstütze 32, der parallel zu den Holmen verläuft. Im Freibereich verläuft die Seele parallel zur Verstellrichtung der Kopfstütze.

Im oberen Freibereich 52 greift eine Rutschverbindung 54, die mit dem Querteil 38 verbunden ist, an der Seele 42 an. Hierzu wird auf Figur 9 verwiesen. Danach ist in einer Ausnehmung des Querteils 38 ein balliges Teil gelagert, das federbelastet an der Seele 42 anliegt. Bei Zug in der Seele 42 in Richtung der Holme bewegt die Seele das Querteil 38 und damit die gesamte Kopfstütze 32. Aufgrund der Rutschverbindung 54 ist aber eine manuelle Einstellung der Kopfstütze 32 möglich, hierzu muß lediglich die Haftreibung im Bereich der Rutschverbindung 54 überwunden werden.

Wie Figur 9 noch zeigt, ist mindestens einer dieser Endbereiche, in Figur 9 ist es der untere Endbereich 50 der unteren Hülle 46, nicht starr an der Tragstruktur 56 der Rückenlehne 22 befestigt, sondern stützt sich über eine Druckfeder gegenüber dieser ab. Dadurch werden Toleranzen ausgeglichen.

Unter oben wird bei dem erfindungsgemäßen Fahrzeugsitz die Richtung zur Kopfstütze 32 hin verstanden, die Kopfstütze 32 ist im normalen Betrieb oben. Unter unten wird demgemäß die Richtung zur Längsverstellvorrichtung 24 verstanden. Unter vorn wird die Richtung zu einer Sitzvorderkante des Sitzteils 20 verstanden, unter hinten die Richtung zur Rückenlehne 22 hin.

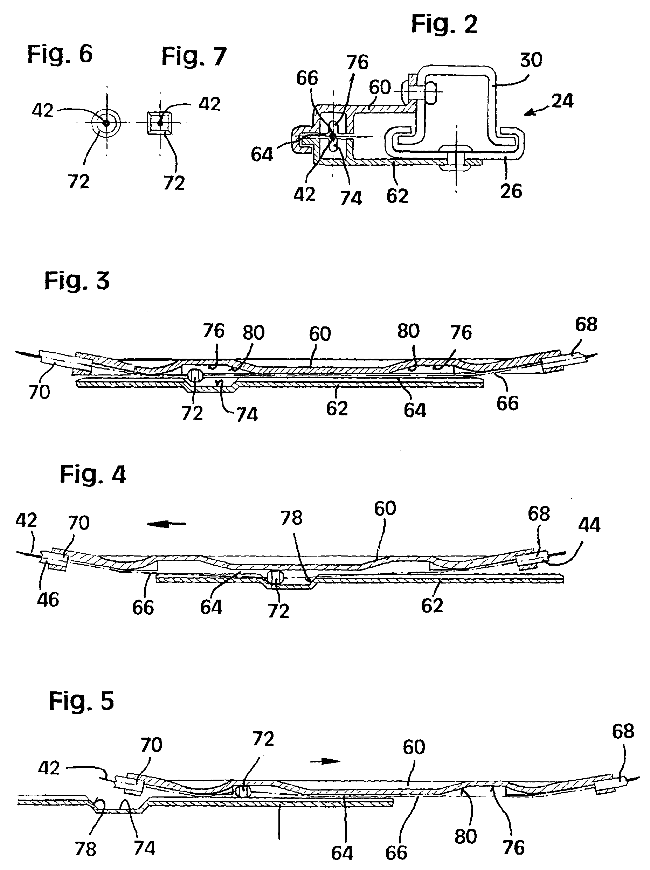

Im Bereich des rechten Schienenpaars ist eine Mitnehmervorrichtung für die Zwangskopplung der Höhenverstellung der Kopfstütze 32 vorgesehen, auf diese Vorrichtung wird im folgenden näher eingegangen: Wie Figur 2 zeigt, ist an die Sitzschiene 30 ein Zusatzteil angesetzt, das im folgenden als Kanalteilstück 60 bezeichnet wird. Ebenso ist an die Bodenschiene 26 ein entsprechendes Zusatzteil angefügt, es wird im folgenden als Kanalteilstück 62 bezeichnet. Beide Kanalteilstücke 60, 62 sind gegeneinander in der Längsverstellrichtung 28 frei verschiebbar und begrenzen zwischen sich einen Kanal 64. Dieser hat einen freien Innenraum, der so bemessen ist, dass die Seele 42 sich frei in ihm bewegen kann und in ihm geführt ist.

Im Bereich der Verstellvorrichtung hat die Seele 42 einen unteren Freibereich 66. Auch hier haben die beiden Hüllen 44, 46 wieder jeweils einen Endbereich, nämlich einen unteren Endbereich 68 der oberen Hülle 44 und einen unteren Endbereich 70 der unteren Hülle 46. Zwischen diesen Endbereichen 68, 70 erstreckt sich der untere Freibereich 66. Er ist wiederum länger, beispielsweise etwas länger als der Verstellweg der Kopfstütze 32. Im gezeigten Ausführungsbeispiel nach den Figuren 3 bis 5 ist der untere Freibereich 66 deutlich länger als der Verstellweg der Kopfstütze.

Im unteren Freibereich ist mit der Seele 42 ein Mitnehmer 72 fest verbunden. Er hat die Form etwa einer kleinen Tonne oder Kugel, er kann aber auch als kleiner Würfel ausgebildet sein, hierzu wird auch auf die Figuren 6 und 7 verwiesen. Der Mitnehmer 72 hat in Radialrichtung zur Seele 42 größere Abmessungen als der Kanal 64, so dass er sich nicht im normalen Kanal 64 befinden kann. Für den Mitnehmer sind einerseits im Kanalteilstück 62 der Bodenschiene 26 eine Mitnehmerbucht 74 und im Kanalteilstück 60 der Sitzschiene 30 zwei in Längsverstellrichtung 28 versetzte, spiegelbildlich angeordnete Mitnehmerfreiräume 76 ausgebildet. Diese Ausparungen, also die Mitnehmerbucht 74 und die beiden Mitnehmerfreiräume 76, sind so bemessen, dass sie zusammen mit dem restlichen, normalen Kanalfreiraum des Kanals 64 den Mitnehmer 72 aufnehmen, wie beispielsweise aus den Figuren 4 und 5 ersichtlich ist. Sie legen also den Mitnehmer in Querrichtung zu Seele 42 fest, so dass er zwar noch einen geringen Bewegungsspielraum hat und rutschen kann, aber nicht in den ungestörten Kanal 64 hineingelangen kann. Die Mitnehmerbucht 74 ist in Längsverstellrichtung 28 durch Schrägflächen 78 begrenzt, die beiden Mitnehmerfreiräume 76 sind an ihrem gegenseitig benachbarten Ende durch eine Rampe 80 in Längsverstellrichtung 28 begrenzt. Der Winkel, den die Rampen 80 mit der Längsverstellrichtung 28 und damit der Richtung der Seele 42 einschließen, liegt bei etwa 15 bis 20 Grad und ist damit deutlich kleiner als der Winkel der Schrägflächen 78, der etwa bei 45 Grad liegt. Die Mitnehmerbucht 74 und die beiden Mitnehmerfreiräume 76 sind in Längsverstellrichtung 28 relativ kurz, ihre Länge ist typischerweise nur etwas größer als die Länge des Mitnehmers 72, typischerweise beträgt die frei Länge das Doppelte bis das Dreifache der Länge des Mitnehmers 72.

Anhand der Figuren 3 bis 5 und 8, sowie anhand der sonstigen Figuren wird nun die Funktion beschrieben: In Figur 8 ist der Längsverstellweg der Längsverstellvorrichtung 24 aufgetragen über der Kopfstützenhöhe. Die Figur zeigt, dass auf einem ersten Teilstück der Längsverstellung, das bei null beginnt, zunächst keine Verstellung der Kopfstütze 32 erfolgt. Erst ab einem gewissen Weg der Längsverstellung setzt, mit Beginn der durch a gekennzeichneten Geraden in der Figur, eine Höhenverstellung der Kopfstütze ein, die weggleich mit der Verstellung der Längsverstellvorrichtung 24 ist. Mit Ende des Verstellweges der Kopfstütze und auch mit dem Übergang der Geraden a in Figur 8 in eine parallel zur Achse des Längsverstellweges findet wiederum nur eine Längsverstellung, aber keine Verstellung der Kopfstütze statt. Es ist ersichtlich, dass die Position der Geraden a verschoben werden kann, sie also an unterschiedlichen Stellen innerhalb des gesamten Längsverstellweges der Längsverstellvorrichtung 24 positioniert werden kann. Dies bedeutet, dass der tatsächliche Verstellbereich der Kopfstütze um den Bereich der Mitte des Weges der Längsverstellvorrichtung 24, oder mehr nach vorn versetzt oder mehr nach rückwärts versetzt angeordnet werden kann.

Der Mitnehmer 72 befindet sich immer in mindestens einer der Ausnehmungen, also der Mitnehmerbucht 74 und den beiden Mitnehmerfreiräumen 76. Er wird beim Betrieb von einer Ausnehmung in die andere übergeben, für die Übergabe dienen die unterschiedlichen Winkel der Schrägflächen 78 bzw. der beiden Rampen 80. In der Darstellung gemäß Figur 3, die dem Punkt c nach Figur 8 entspricht, befindet sich der Mitnehmer 72 im Übergangsbereich der Zwangskopplung. In der Position gemäß Figur 4 ist die Relativposition der beiden Schienen 26, 30 und ihrer Zubehörteile so, dass eine Verstellung der Höhe der Kopfstütze 32 erfolgt, dies entspricht also einer Position entlang der Schrägen a in Figur 8.

Für eine Verstellung der Höhe der Kopfstütze 32 ist es notwendig, dass sich der Mitnehmer 72 in der Mitnehmerbucht 74 befindet. Ist dies nämlich der Fall, erfolgt bei einer Relativbewegung zwischen den beiden Schienen 26, 30 ein Antrieb des Mitnehmer 72 und damit ein Antrieb der Seele 42. Befindet sich der Mitnehmer 72 jedoch in einem der beiden Mitnehmerfreiräume 76, wie beispielsweise Figur 5 zeigt, findet keine Verstellung der Höhe der Kopfstütze 32 statt, eine Verschiebung der Schienen 26, 30 gegeneinander hat also keine Auswirkung auf die Höhenverstellung der Kopfstütze 32.

## Patentansprüche

1. Fahrzeugsitz mit a) einem Sitzteil (20), mit b) einer Rückenlehne (22), mit c) einer Längsverstellvorrichtung (24), die mindestens ein Schienenpaar bestehend aus einer Bodenschiene (26) und einer gegenüber dieser Bodenschiene (26) in einer Längsverstellrichtung (28) verschiebbaren Sitzschiene (30), die mit dem Sitzteil (20) verbunden ist, und mit d) einer gegenüber der Rückenlehne (22) höhenverstellbaren Kopfstütze (32), dadurch gekennzeichnet, dass die Kopfstütze (32) über einen Bowdenzug (40) mit der Bodenschiene (26) in Verbindung steht, so dass bei einer Längsverschiebung der Sitzschiene (30) gegenüber der Bodenschiene (26) die Kopfstütze (32) höhenverstellt wird.

2. Fahrzeugsitz nach Anspruch 1, dadurch gekennzeichnet, dass der Bowdenzug (40) eine O-förmig geschlossene Seele (42) und zwei separate Hüllen (44, 46) hat, dass in der Rückenlehne (22) die Seele (42) entlang eines oberen Freibereichs (52) ohne Hülle ist, in diesem oberen Freibereich (52) im wesentlichen parallel zur Verstellrichtung der Kopfstütze (32) verläuft und mit einer in der Rückenlehne (22) befindlichen Trageinheit der Kopfstütze (32) verbunden ist, vorzugsweise über eine Rutschverbindung (54) verbunden ist, dass die eine Hülle (44) einen oberen Endbereich (48) hat, der oberhalb des oberen Freibereichs (52) an der Rückenlehne (22) befestigt ist und dass die andere Hülle (46) ebenfalls einen oberen Endbereich hat, der unterhalb des oberen Freibereichs (52) an der Rückenlehne (22) befestigt ist.

3. Fahrzeugsitz nach Anspruch 2, dadurch gekennzeichnet, dass der obere Freibereich (52) nicht kürzer ist als der maximale Weg der Höhenverstellung der Kopfstütze (32).

4. Fahrzeugsitz nach Anspruch 2, dadurch gekennzeichnet, dass die Rutschverbindung (54) ein federbelastetes Gleitteil hat, das an der Seele (42) im oberen Freibereich (52) reibschlüssig anliegt.

5. Fahrzeugsitz nach Anspruch 1, dadurch gekennzeichnet, dass der Bowdenzug (40) eine O-förmig geschlossen umlaufende Seele (42) und zwei separate Hüllen (44, 46) hat, dass im Bereich der Längsführung die Seele (42) einen unteren Freibereich (66) hat, in der sie ohne Hülle ist und parallel zur Längsverstellrichtung (28) verläuft, dass die beiden Hüllen (44, 46) jeweils einen unteren Endbereich haben, von denen der eine (70) am vorderen Ende des unteren Freibereichs (66) mit der Sitzschiene (30) verbunden ist und der andere (68) am hinteren Ende des unteren Freibereichs (66) mit der Sitzschiene (30) verbunden ist, und dass im unteren Freibereich (52) ein Mitnehmer (72) mit der Seele (42) verbunden ist, der mit einer ihm angepaßten Mitnehmerbucht (74) der Bodenschiene (26) zusammenwirkt.

6. Fahrzeugsitz nach Anspruch 5, dadurch gekennzeichnet, dass die obere Hülle (44) am hinteren Ende des unteren Freibereichs (66) und dass die untere Hülle (46) am vorderen Ende des unteren Freibereichs (66) mit der Sitzschiene (30) verbunden ist.

7. Fahrzeugsitz nach Anspruch 5, dadurch gekennzeichnet, dass der untere Freibereich (66) in einem Kanal (64) verläuft, der einerseits von einem Kanalteilstück (62) der Bodenschiene (26) und andererseits von einem Kanalteilstück (60) der Sitzschiene (30) begrenzt ist, dass dieser Kanal (64) im Gesamtquerschnitt gesehen größer ist als die Seele (42), aber kleiner ist als der Mitnehmer (72), dass im Kanalteilstück (62) der Bodenschiene (26) die Mitnehmerbucht (74) vorgesehen ist, die größenmäßig dem Mitnehmer (72) angepaßt ist und die in Längsverstellrichtung (28) gesehen eine vordere und eine hintere Schrägfläche (78) hat, und dass das Kanalteilstück (60) der Sitzschiene (30) zwei Mitnehmerfreiräume (76) aufweist, die bei einer Längsverstellung nacheinander in Begegnung mit der Mitnehmerbucht (74) kommen, wie diese dem Mitnehmer (72) angepaßt sind und an ihren einander zugewandten Endbereichen in Verstellrichtung jeweils durch eine Rampe (80) begrenzt sind.

8. Fahrzeugsitz nach Anspruch 1, dadurch gekennzeichnet, dass der Verstellweg der Längsführung deutlich größer, beispielsweise zweimal so groß ist, wie der Weg der Höhenverstellung der Kopfstütze (32).

9. Fahrzeugsitz nach Anspruch 7, dadurch gekennzeichnet, dass der Abstand der beiden Rampen (80) dem Weg der Höhenverstellung der Kopfstütze (32) angepaßt ist, insbesondere etwa dem Weg der Höhenverstellung der Kopfstütze (32) entspricht.

10. Fahrzeugsitz nach Anspruch 7, dadurch gekennzeichnet, dass der Winkel der Rampen (80) zur Verstellrichtung kleiner ist als der Winkel der beiden Schrägflächen (78).
